# EUROPEAN PATENT APPLICATION

(11) **EP 4 360 854 A1**
(43) Date of publication of application: **01.05.2024**
(21) Application number: 23204363.8
(22) Date of filing: 18.10.2023
(51) Int. Cl.: B29C 64/153, B22F 12/00, B29C 64/268, B29C 64/286, B33Y 10/00, B33Y 30/00

(54) **THREE-DIMENSIONAL MODELING APPARATUS AND THREE-DIMENSIONAL MODELING METHOD**

(30) Priority: 24.10.2022 JP 2022169849
(71) Applicant: SCREEN Holdings Co., Ltd., Kyoto-shi, Kyoto 602-8585 (JP)
(72) Inventor: MIZUNO, Hirofumi, Kyoto 602-8585 (JP); HISHITANI, Daisuke, Kyoto 602-8585 (JP)
(74) Representative: Goddar, Heinz J.

(57) **Abstract**

A three-dimensional modeling apparatus (1) includes a layer formation mechanism (12) for forming a material layer in a modeling space (30), an optical head (11) for irradiating the material layer with light, and a head moving mechanism (13) for moving the optical head (11) in a head moving direction parallel to the material layer. The optical head (11) includes a light source, a diffractive optical modulator having a plurality of modulation elements which are linearly arranged, an illumination optical system for guiding light emitted from the light source to the optical modulator, and a projection optical system for forming a projection image of the optical modulator on the material layer and moving the projection image in a scan direction (+X) crossing a direction corresponding to an arrangement direction of the plurality of modulation elements and crossing the head moving direction (+Y) by changing an orientation of a mirror.

## Description

### TECHNICAL FIELD

The present invention relates to a technique for forming a three-dimensional model by using modulated light.

### [CROSS REFERENCE TO RELATED APPLICATION]

The present application claims the benefit of priority to Japanese Patent Application No. 2022-169849 filed on October 24, 2022, the content of which is incorporated herein by reference in its entirety.

### BACKGROUND ART

In recent years, an SLS (Selective Laser Sintering) type three-dimensional modeling apparatus has been used, which emits a modulated laser beam to a layer of a modeling material such as metal powder, resin powder, or the like to thereby bond the modeling material and repeats layer formation and bonding of the modeling material, to thereby perform three-dimensional modeling. National Publication of Translation No. 2021-509094 (Document 1), for example, discloses a three-dimensional modeling apparatus that emits a plane beam to a grating light valve and then irradiates an object construction region surface with the light modulated through a beam expander, a galvano scanner operating in an x-y plane, and an Fθ lens in this order.

Further, National Publication of Translation No. 2018-535114 (Document 2) discloses a technique in which a dispenser and an energy source are provided to form a material layer on a print head module and a desired region of the material layer is selectively melted by a beam emitted from the energy source while a feed material is deposited.

In the three-dimensional modeling apparatus that repeats formation of a material layer and irradiation of a light beam, when a method of scanning an irradiation position of the light beam by changing an orientation of a reflection mirror is adopted, there is a limitation in increasing the size of a modeled object. As a matter of course, there is a possible case where a plurality of optical heads for emitting light beams are arranged or where an upsized and high-powered optical head is provided, the three-dimensional modeling apparatus disadvantageously becomes expensive. Further, the three-dimensional modeling apparatus requires time for forming a material layer, time until when a material existing in a region irradiated with the light beam is thermally stabilized, and the like, as well as irradiation time of the light beam. For this reason, a scanning area of the light beam is simply widened, the productivity is significantly reduced.

### SUMMARY OF THE INVENTION

It is a first object of the present invention to make it possible to manufacture a large-scale modeled object while reducing a manufacturing cost of a three-dimensional modeling apparatus. Further, it is a second object of the present invention to further increase productivity.

A first aspect of the present invention is intended for a three-dimensional modeling apparatus for forming a three-dimensional model in material layers layered in a modeling space by repeating formation of a material layer of a powdery or pasty modeling material and irradiation of light onto the material layer. The three-dimensional modeling apparatus includes a layer formation mechanism for forming a material layer in the modeling space, an optical head for irradiating the material layer with light, and a head moving mechanism for moving the optical head in a head moving direction parallel to the material layer. The optical head includes a light source, a diffractive optical modulator having a plurality of modulation elements which are linearly arranged, an illumination optical system for guiding light emitted from the light source to the optical modulator, and a projection optical system for forming a projection image of the optical modulator on the material layer and moving the projection image in a scan direction crossing a direction corresponding to an arrangement direction of the plurality of modulation elements and crossing the head moving direction by changing an orientation of a mirror.

According to the present invention, it is possible to create a large-scale modeled object while reducing a manufacturing cost of the three-dimensional modeling apparatus.

A second aspect of the present invention is intended for the three-dimensional modeling apparatus of the first aspect, wherein the optical modulator is a planar light valve or a grating light valve.

A third aspect of the present invention is intended for the three-dimensional modeling apparatus of the first aspect (or of the first aspect or the second aspect), wherein the optical head continuously moves in the head moving direction.

A fourth aspect of the present invention is intended for the three-dimensional modeling apparatus of the first aspect (or of any one of the first aspect to the third aspect), wherein the layer formation mechanism forms a material layer toward the head moving direction, and before finishing irradiation of light onto one material layer by the optical head, the layer formation mechanism starts formation of a next material layer.

A fifth aspect of the present invention is intended for a three-dimensional modeling apparatus for forming a three-dimensional model in material layers layered in a modeling space by repeating formation of a material layer of a powdery or pasty modeling material and irradiation of light onto the material layer. The three-dimensional modeling apparatus includes a layer formation mechanism for forming a material layer in the modeling space, an optical head for irradiating the material layer with light, and a head moving mechanism for moving the optical head in a head moving direction parallel to the material layer. The layer formation mechanism forms a material layer toward the head moving direction, and before finishing irradiation of light onto one material layer by the optical head, the layer formation mechanism starts formation of a next material layer. According to the present invention, it is possible to further increase productivity.

A sixth aspect of the present invention is intended for the three-dimensional modeling apparatus of the fourth aspect or the fifth aspect, wherein time from when the optical head starts irradiation of light onto the one material layer until when the layer formation mechanism starts formation of the next material layer is variable.

A seventh aspect of the present invention is intended for the three-dimensional modeling apparatus of the fourth aspect or the fifth aspect (or of any one of the fourth aspect to the sixth aspect), wherein the head moving direction of the optical head is reversible, the layer formation mechanism forms a material layer toward a reversed head moving direction which is a reversed direction of the head moving direction when the optical head moves in the reversed head moving direction, and before the optical head finishes irradiation of light onto one material layer while moving in the reversed head moving direction, the layer formation mechanism starts formation of a next material layer toward the reversed head moving direction.

An eighth aspect of the present invention is intended for a three-dimensional modeling method for forming a three-dimensional model in material layers layered in a modeling space by repeating formation of a material layer of a powdery or pasty modeling material and irradiation of light onto the material layer. The three-dimensional modeling method includes a) lowering a latest material layer by the thickness of one layer, b) starting irradiation of light onto the latest material layer by the optical head while moving the optical head in a head moving direction parallel to the latest material layer, c) starting formation of a next material layer toward the head moving direction after a delay time set in advance elapses after the operation b) and before finishing irradiation of light onto the latest material layer, d) finishing irradiation of light onto the latest material layer, e) finishing formation of the next material layer, and f) repeating the operations a) to e).

These and other objects, features, aspects and advantages of the present invention will become more apparent from the following detailed description of the present invention when taken in conjunction with the accompanying drawings.

### BRIEF DESCRIPTION OF DRAWINGS

FIG. 1 is a perspective view showing a three-dimensional modeling apparatus;
FIG. 2 is a view showing a configuration of the three-dimensional modeling apparatus;
FIG. 3 is a view showing a schematic configuration of an optical head;
FIG. 4 is a view showing a simplified structure of an optical modulator;
FIG. 5 is a view simply showing a projection optical system;
FIG. 6 is a view used for explaining a manner in which a projection surface of a material layer is irradiated with a multi-spot line beam;
FIG. 7 is a block diagram showing a functional configuration of the three-dimensional modeling apparatus;
FIG. 8 is a flowchart showing an operation flow of the three-dimensional modeling apparatus;
FIG. 9 is a view showing another example of irradiation of a light beam onto the projection surface;
FIG. 10 is a view showing a three-dimensional modeling apparatus in accordance with another example; and
FIG. 11 is a view showing a three-dimensional modeling apparatus in accordance with still another example.

### DESCRIPTION OF EMBODIMENTS

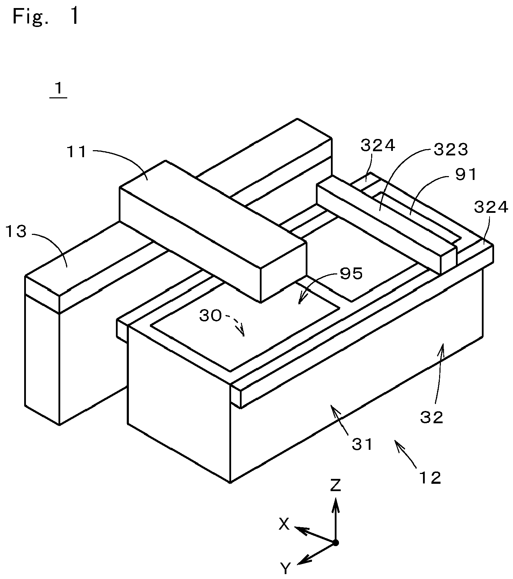

FIG. 1 is a perspective view showing a three-dimensional modeling apparatus 1 in accordance with one preferred embodiment of the present invention. The three-dimensional modeling apparatus 1 is an SLS (Selective Laser Sintering) type apparatus which irradiates a powdery or pasty modeling material with a modulated laser beam and fusion-bonds or sinters the modeling material, to thereby perform three-dimensional modeling. Specifically, the three-dimensional modeling apparatus 1 forms a three-dimensional model in material layers layered in a modeling space by repeating formation of a material layer and irradiation of light onto the material layer. The modeling material is, for example, a metal, engineering plastics, ceramics, a synthetic resin, or the like. The modeling material may contain a plurality of kinds of materials.

In the following description, "irradiation of light onto a material layer" refers to irradiation of a light beam onto a material layer, and exactly refers to irradiation of a spatially-modulated light beam onto a material layer. Further, the spatially-modulated light beam is also referred to as a "multi-spot line beam". As described later, an irradiation position of a light beam scans (moves) on a material layer. Irradiating a desired region of a material layer with light by scanning a light beam is also sometimes simply expressed as "irradiation of light onto a material layer". Further, irradiating a desired region of a material layer with light is also referred to as "exposure". The above-described exposure for irradiating only a necessary region with light by using a spatially-modulated light beam is also referred to as "writing".

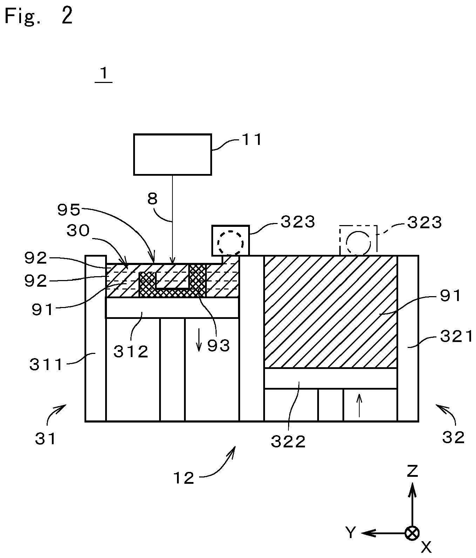

The three-dimensional modeling apparatus 1 includes an optical head 11, a layer formation mechanism 12, and a head moving mechanism 13. The layer formation mechanism 12 forms a material layer which is a thin layer of a modeling material 91 in a modeling space 30. The optical head 11 emits modulated light onto a processing region of a surface of the material layer. The head moving mechanism 13 moves the optical head 11 in a Y direction in FIG. 1. FIG. 2 is a view showing a cross section of the layer formation mechanism 12 and the simplified optical head 11. In FIG. 2, parallel hatch lines representing a cross section are partially omitted. As described later, in the modeling space 30, a plurality of material layers 92 are sequentially formed, being laminated.

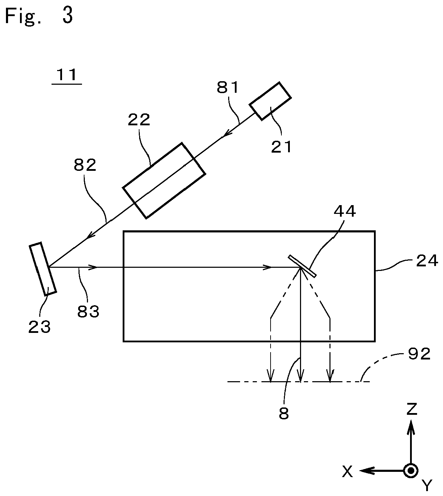

FIG. 3 is a view showing a schematic configuration of the optical head 11. The optical head 11 includes a laser light source 21, an illumination optical system 22, an optical modulator 23, and a projection optical system 24. FIG. 3 is a simplified view, and an arrangement of constituent elements is different from an actual arrangement. The laser light source 21 may be provided outside the optical head 11, and in this case, light emitted from the laser light source 21 is guided into the optical head 11. The projection optical system 24 has a galvano scanner 44 and scans an irradiation position of light (a multi-spot line beam 8 described later) on the material layer 92 in a horizontal X direction.

As shown in FIG. 2, the layer formation mechanism 12 includes a modeling part 31 and a feeding part 32. The modeling part 31 includes a first cylinder 311 and a first piston 312. The first cylinder 311 is a tubular member extending in an up-and-down direction. The plan-view shape of an internal space of the first cylinder 311 is, for example, a substantially rectangular shape. The first piston 312 is a substantially flat plate-like or substantially columnar member which is accommodated in the internal space of the first cylinder 311, and the plan-view shape thereof is almost the same as that of the internal space of the first cylinder 311. The first piston 312 is movable in the up-and-down direction inside the internal space of the first cylinder 311. In the modeling part 31, a three-dimensional space surrounded by an inner surface of the first cylinder 311 and an upper surface of the first piston 312 serves as the modeling space 30 in which the three-dimensional modeling is performed.

The feeding part 32 includes a second cylinder 321, a second piston 322, and a layer forming member 323 which is a squeegee. The second cylinder 321 is a tubular member extending in the up-and-down direction and disposed adjacent to the side of the first cylinder 311. The plan-view shape of an internal space of the second cylinder 321 is, for example, a substantially rectangular shape. The second piston 322 is a substantially flat plate-like or substantially columnar member which is accommodated in the internal space of the second cylinder 321, and the plan-view shape thereof is almost the same as that of the internal space of the second cylinder 321. The second piston 322 is movable in the up-and-down direction inside the internal space of the second cylinder 321. In the feeding part 32, a three-dimensional space surrounded by an inner surface of the second cylinder 321 and an upper surface of the second piston 322 serves as a storage (pooling) space for storing the modeling material 91 which is to be fed to the modeling part 31. The layer forming member 323 is a rodlike (e.g., substantially columnar) member extending in the X direction across an upper opening of the second cylinder 321. The layer forming member 323 is movable horizontally in the Y direction along an upper end surface of the second cylinder 321 by a pair of drive mechanisms 324 shown in FIG. 1.

In the feeding part 32, the second piston 322 goes up by a predetermined distance and the modeling material 91 inside the second cylinder 321 is thereby lifted upward. At that time, a surface of the modeling material 91 inside the modeling space 30 is lowered by one layer of the material layer 92 in advance by the first piston 312. In the three-dimensional modeling apparatus 1, in this state, a projection surface 95 which is a surface of the latest material layer 92 is irradiated with the multi-spot line beam 8 emitted from the optical head 11. In other words, scanning of the multi-spot line beam 8 which is a projection image of the optical modulator 23 (see FIG. 3) is performed on the surface of the modeling material 91 inside the modeling space 30. The modeling materials are thereby bonded in a predetermined region of the projection surface 95. As a result, a portion which corresponds to one layer of the three-dimensional model 93 is formed.

Though details will be described later, in the three-dimensional modeling apparatus 1, before finishing irradiation of the multi-spot line beam 8 onto one material layer 92, the move of the layer forming member 323 from above the second cylinder 321 to above the first cylinder 311 is started. By moving the layer forming member 323, the modeling material 91 protruding upward from the upper end surface of the second cylinder 321 is fed into the modeling space 30 of the modeling part 31. An upper surface of the modeling material 91 held inside the modeling space 30 is positioned at a predetermined height (for example, at the level as high as an upper end surface of the first cylinder 311). By the above described operations, a material layer 92 is formed in the modeling space 30.

After the scanning of the multi-spot line beam 8 on the processing region which is the projection surface 95 and formation of a new material layer 92 are finished, the first piston 312 is lowered by the distance of one layer of the material layer 92. As the material layers 92 layered inside the modeling space 30 are lowered, the latest material layer 92 (and the projection surface 95) is lowered by one layer. On the other hand, the modeling material 91 is pushed up in the feeding part 32. After that, the above-described scanning of the multi-spot line beam 8 and the formation of the material layer 92 are repeated required number of times. In other words, the scanning of the multi-spot line beam 8 and the formation of a new projection surface 95 which are performed partially concurrently are repeated. As a result, the three-dimensional model 93 is formed inside the modeling space 30.

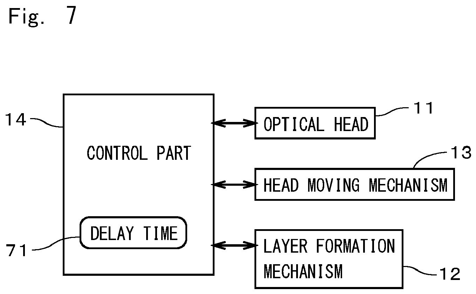

In the three-dimensional modeling apparatus 1, the optical head 11, the layer formation mechanism 12, and the head moving mechanism 13 are controlled by a control part (see FIG. 7) on the basis of design data (e.g., CAD data) or the like of a three-dimensional model to be manufactured. The control part is, for example, an ordinary computer including a processor, a memory, an input/output part, and a bus. Further, the constituent elements of the control part may be changed in various ways.

Next, the optical head 11 shown in FIG. 3 will be described. The laser light source 21 emits a laser beam 81 to the illumination optical system 22. The laser light source 21 is, for example, a fiber laser light source. The wavelength of the laser beam 81 is, for example, 1.070 µm. Further, the type of the laser light source 21 and the wavelength of the laser beam 81 may be changed in various ways.

The illumination optical system 22 shapes a luminous flux section of the laser beam 81 into a shaped beam 82 having a substantially rectangular shape which is long in one direction (hereinafter, referred to as a "long axis direction") and guides the shaped beam 82 to the optical modulator 23. In other words, the cross-sectional shape of the shaped beam 82 is a substantially rectangular shape which is long in the long axis direction and short in a short axis direction perpendicular to an optical axis and the long axis direction. The cross-sectional shape of the shaped beam 82 is a shape of the shaped beam 82 on a plane perpendicular to the optical axis. The long axis direction and the short axis direction are directions perpendicular to a direction of the optical axis, i.e., a traveling direction of the shaped beam 82. In the following description, the luminous flux (including a modulated one) is expressed as "light" or a "beam", and the "cross section" of the "light" or the "beam" refers to a cross section of the luminous flux on a plane perpendicular to the optical axis. The cross-sectional shape of the shaped beam 82 can be regarded to be a straight linear shape extending in the long axis direction. The shape of the shaped beam 82 on the optical modulator 23 is, for example, a substantially rectangular shape having a length of about 27 mm in the long axis direction and a length of about 1 mm in the short axis direction.

The optical modulator 23 converts the shaped beam 82 emitted from the illumination optical system 22 into modulated light 83 obtained by one-dimensional spatial modulation. As the optical modulator 23, for example, used is a PLV (Planar Light Valve) which can perform highspeed modulation and endure a laser beam of kW class. The PLV is a two-dimensional diffractive spatial optical modulator, and in the optical head 11, this is used as a one-dimensional spatial modulator.

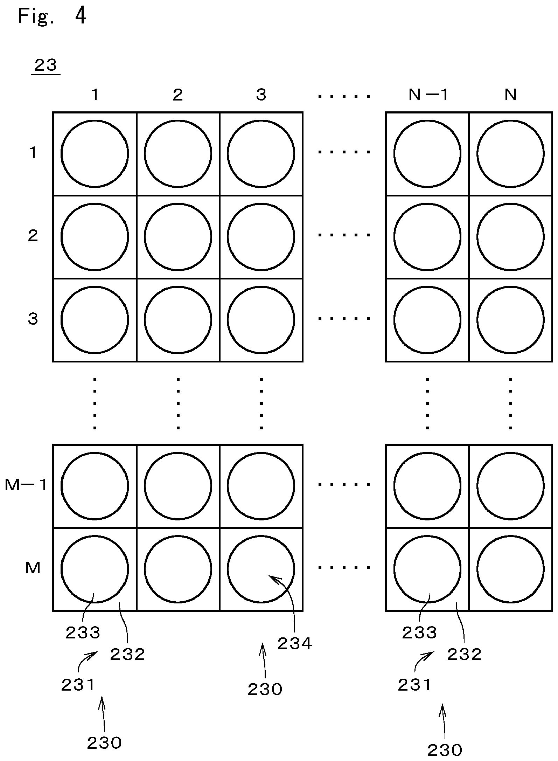

FIG. 4 is a view showing a simplified structure of the optical modulator 23 which is a PLV. The optical modulator 23 includes a plurality of substantially rectangular pixels 231 which are arranged in a matrix (i.e., two-dimensionally arranged) on a not-shown substrate. In the optical modulator 23, surfaces of the plurality of pixels 231 serve as modulation surfaces 234. In the exemplary case shown in FIG. 4, arranged are M pixels 231 in a longitudinal direction and N pixels 231 in a transverse direction of this figure. The transverse direction in FIG. 4 corresponds to the long axis direction of the shaped beam 82 (see FIG. 3) and the longitudinal direction in FIG. 4 corresponds to the short axis direction of the shaped beam 82.

Each pixel 231 is a modulation mechanism including a fixed member 232 and a movable member 233. The fixed member 232 is a planar and substantially rectangular member fixed to the above-described substrate and provided with a substantially circular opening at its center. The movable member 233 is a substantially circular member provided in the opening of the fixed member 232. On an upper surface of the fixed member 232 (i.e., a plane of this side in a direction perpendicular to this drawing paper in FIG. 4), provided is a fixed reflection surface. On an upper surface of the movable member 233, provided is a movable reflection surface. The movable member 233 is movable in the direction perpendicular to this drawing paper in FIG. 4.

In each pixel 231, by changing a relative position between the fixed member 232 and the movable member 233 in the direction perpendicular to this drawing paper in FIG. 4, a reflected light from the pixel 231 is switched between a zero-order (diffracted) light (i.e., a specularly reflected light) and a non-zero-order diffracted light. In other words, in the pixel 231, when the movable member 233 moves relatively to the fixed member 232, light modulation using a diffraction grating is performed. The zero-order light emitted from the optical modulator 23 is guided to the modeling space 30 by the projection optical system 24 (see FIG. 3). Further, the non-zero-order diffracted light (mainly a first-order diffracted light) emitted from the optical modulator 23 is blocked as appropriate, not reaching the modeling space 30.

In the optical modulator 23, the reflected lights from the M pixels 231 (hereinafter, also referred to as a "pixel row 230") aligned in the longitudinal direction of FIG. 4 are in the same diffraction state. Specifically, when the reflected light from one pixel 231 is a zero-order light, the reflected lights from all the other pixels 231 (i.e., (M-1) pixels 231) in the pixel row 230 including the above one pixel 231 are also the zero-order lights. Further, when the reflected light from one pixel 231 is a non-zero-order diffracted light, the reflected lights from all the other pixels 231 in the pixel row 230 including the above one pixel 231 are also the non-zero-order diffracted lights. In other words, in the optical modulator 23, modulation is not performed in the short axis direction of the shaped beam 82 but is performed in the long axis direction thereof. Thus, in the optical modulator 23, the M pixels 231 in one pixel row 230 (i.e., M modulation mechanisms) serve as one modulation element corresponding to one unit space. The optical modulator 23 serves as the one-dimensional spatial optical modulator including N modulation elements aligned in the long axis direction of the shaped beam 82. In a preferable case, N is 1000 or more.

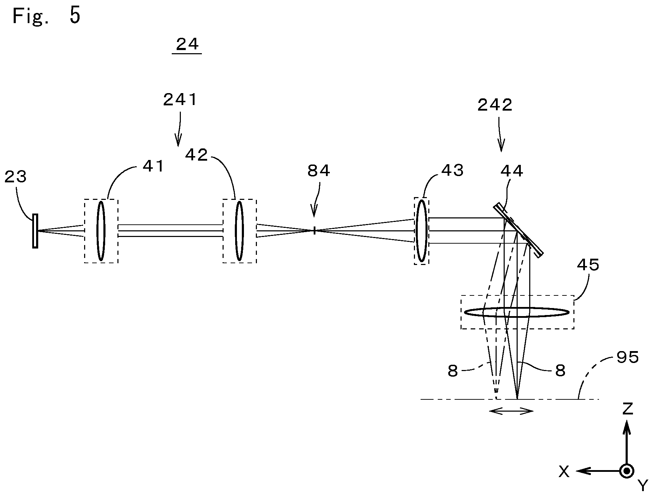

Next, the projection optical system 24 will be described. FIG. 5 is a view schematically showing the projection optical system 24. The projection optical system 24 includes a first projection optical system 241 and a second projection optical system 242. The first projection optical system 241 forms an intermediate image 84 of the optical modulator 23 at a predetermined intermediate position. The second projection optical system 242 scans this intermediate image 84 while projecting the intermediate image 84 on the material layer 92, i.e., on the projection surface 95. In other words, the projection optical system 24 scans a projection image of the optical modulator 23 while forming the projection image on the material layer 92. In FIG. 5, the direction perpendicular to this drawing paper corresponds to a direction in which the modulation elements of the optical modulator 23 are arranged (hereinafter, also referred to as the "long axis direction").

The first projection optical system 241 has a first lens group 41 and a second lens group 42 in this order from the side of the optical modulator 23. The first lens group 41 is at least one lens. The second lens group 42 is also at least one lens. The second projection optical system 242 has a third lens group 43, a galvano scanner 44, and a fourth lens group 45 in this order from the side of the first projection optical system 241. The third lens group 43 is at least one lens. The galvano scanner 44 is a scanning mechanism for scanning the modulated light in the X direction by changing an orientation of a mirror. FIG. 5 simply shows only a mirror portion of the galvano scanner 44. The fourth lens group 45 is at least one lens.

The intermediate image 84 of the optical modulator 23 is formed by the first projection optical system 241. The first lens group 41 and the second lens group 42 may be constituted of only spherical lenses, but in a case where one-dimensional modulated light is generated, since a shape of the modeled object depends on the modulation in the long axis direction, the size of the intermediate image 84 may be reduced in the short axis direction by including a cylindrical lens or the like in the first projection optical system 241.

The third lens group 43 is preferably one lens or a doublet (laminated) lens which suppresses aberration. The fourth lens group 45 is also preferably one lens or a doublet (laminated) lens which suppresses aberration. The second projection optical system 242 is preferably constituted of only spherical lenses, i.e., which is a so-called fθ lens. The second projection optical system 242 may be image-side telecentric or image-side non-telecentric. Further, the second projection optical system 242 may be a non-fθ lens. By the second projection optical system 242, a projection image of the intermediate image 84 is formed on the projection surface 95 which is a surface of the material layer 92 (i.e., powder surface). By the second projection optical system 242, the intermediate image 84 becomes the multi-spot line beam 8 and are emitted onto the projection surface 95 which is a processing region. Further, by the galvano scanner 44, the projection image is scanned on the projection surface 95 in the X direction. FIG. 5 simply shows a manner in which the multi-spot line beam 8 is scanned, by branching an optical path from the galvano scanner 44.

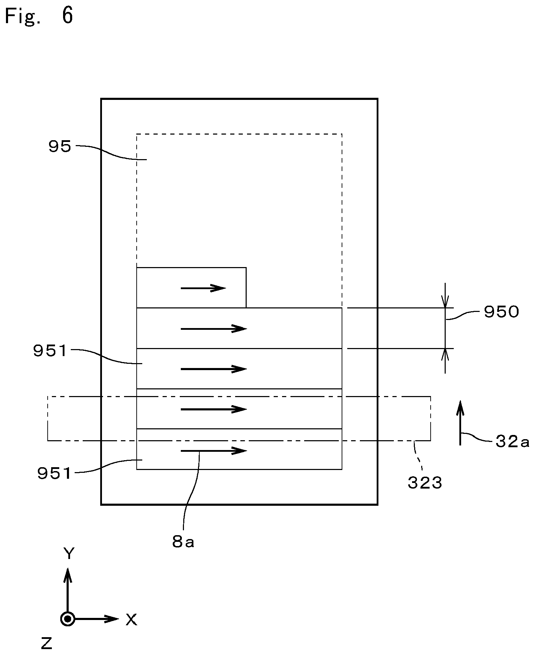

FIG. 6 is a view used for explaining a manner in which the projection surface 95 of the material layer 92 is irradiated with the multi-spot line beam 8. In FIG. 6, the Y direction corresponds to the long axis direction. Specifically, spots of ON (light irradiation) and OFF (light non-irradiation) of the multi-spot line beam 8 are aligned in the Y direction. The reference sign "950" in FIG. 6 represents the length of a spot row of the multi-spot line beam 8, and when the multi-spot line beam 8 is moved in a (+X) direction as indicated by the arrow 8a by the galvano scanner 44, writing is performed on one region 951 with modulated light. Hereinafter, the region 951 will be referred to as a "swath".

After writing on one swath 951 is completed, the optical head 11 is step-moved by the head moving mechanism 13 of FIG. 1 in a (+Y) direction which is the head moving direction parallel to the material layer 92, and writing is thereby performed on the swath 951 adjacent thereto in the (+Y) direction. Writing is sequentially performed onto adjacent swaths 951, to thereby complete writing on the projection surface 95 of the material layer 92, i.e., exposure of the projection surface 95 by the irradiation of modulated light.

FIG. 7 is a block diagram showing a functional configuration of the three-dimensional modeling apparatus 1. The control part 14 controls the optical head 11, the layer formation mechanism 12, and the head moving mechanism 13. The control part 14 controls the optical head 11 and the head moving mechanism 13, to thereby perform irradiation of the modulated light (multi-spot line beam 8) onto the projection surface 95. The control part 14 controls the layer formation mechanism 12, to thereby form a material layer 92 in the modeling space 30. The control part 14 stores a delay time 71. With the control by the control part 14, after the delay time 71 elapses from when the irradiation of the modulated light onto the projection surface 95 is started, the layer formation mechanism 12 starts the formation of a material layer 92.

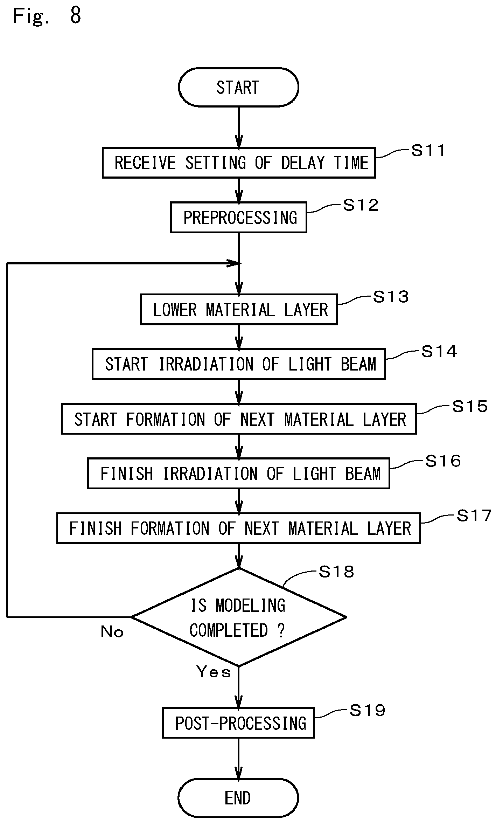

FIG. 8 is a flowchart showing an operation flow of the three-dimensional modeling apparatus 1. First, the three-dimensional modeling apparatus 1 receives a setting of the delay time (Step S11). Specifically, when an operator inputs delay time through an input device such as a keyboard, a mouse, or the like that the control part 14 has, an input value is stored as the delay time 71 in a memory that the control part 14 has. Thus, the delay time 71 is a value which can be changed. When it is not necessary to change the delay time 71, Step S11 may be omitted.

In a preprocessing (Step S12), for example, a plurality of formations of material layers 92, temperature control of the material layers 92 by a not-shown heating part, and the like are performed. Next, the first piston 312 is lowered by the thickness of one layer of the material layer 92 (Step S13). A top layer, i.e., the projection surface 95 which is a surface of the latest material layer 92 is positioned at the height suitable for the irradiation of the multi-spot line beam 8. After that, the irradiation and the scanning of the multi-spot line beam 8 onto the projection surface 95 are started (Step S14). Thus, in the three-dimensional modeling apparatus 1, writing is performed on the surface of the material layer 92 with the multi-spot line beam 8 at a height lower than that immediately after the formation of the material layer 92 by the thickness of one material layer 92.

As described with reference to FIG. 6, by moving the optical head 11 in the (+Y) direction while scanning the multi-spot line beam 8 in the (+X) direction, the writing is performed. After the delay time 71 elapses from the start of writing, the feeding part 32 starts formation of a next material layer 92 (Step S15). In other words, before finishing the irradiation of light onto one material layer 92 by the optical head 11, the layer formation mechanism 12 starts formation of a next material layer 92. Specifically, the modeling material 91 is pushed up to above an upper end of the second cylinder 321 by the second piston 322 in advance, and the layer forming member 323 starts moving in the (+Y) direction to follow the moving of the optical head 11, to thereby form the next material layer 92 on the projection surface 95 toward the (+Y) direction. In FIG. 6, the layer forming member 323 is represented by the two-dot chain line and the moving of the layer forming member 323 is indicated by the arrow 32a. In the three-dimensional modeling apparatus 1, the irradiation of light and the formation of the material layer 92 are performed partially concurrently. It is thereby possible to reduce the time required for modeling and increase the productivity of the modeled object.

The delay time 71 is determined in consideration of the time from when the modeling material 91 is irradiated with light and fused (or sintered) until when the modeling material 91 is thermally stabilized. After the irradiation of light, the region which is thermally stabilized is thereby sequentially covered with a next material layer 92.

After writing of one cross section (one slice) of the modeled object is performed on the projection surface 95, the irradiation of the light beam is finished (Step S16), and after that, the formation of the material layer 92 is also finished (Step S 17). In a case where irradiation of the light beam onto a next material layer 92 is required (Step S18), the process goes back to Step S13, and lowering of the material layer 92, irradiation of the light beam, and formation of the material layer 92 which is performed partially concurrently with the irradiation of the light beam are repeated (Steps S13 to S17). After writing of all the slices of the modeled object is completed (Step S18), performed is a post-processing such as waiting for a predetermined time, an operation of taking the modeled object out, and the like (Step S19). Further, Step S17 (formation of the material layer 92) after the last Step S 16 (irradiation of light) may not be performed.

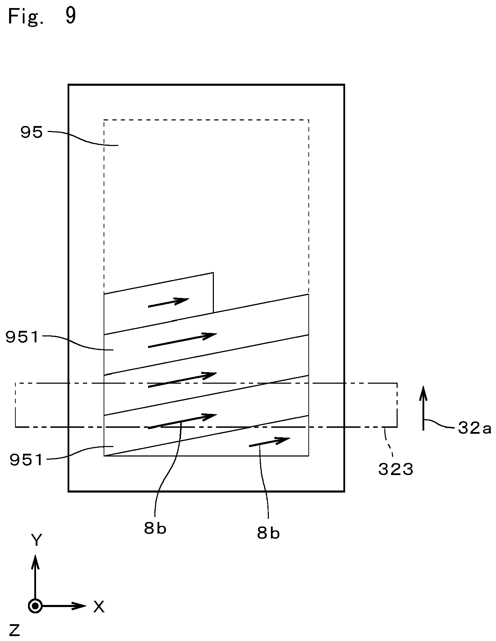

FIG. 9 is a view showing another example of irradiation of the light beam onto the projection surface 95 in the three-dimensional modeling apparatus 1. In the exemplary case shown in FIG. 9, the optical head 11 continuously moves in the (+Y) direction. "Continuously" means that moving of the optical head 11 is not stopped in the course of the irradiation of the light beam. Therefore, each swath 951 is inclined toward the (+Y) side with respect to the (+X) direction as indicated by the arrow 8b. It is thereby possible to reduce the time for the writing on the projection surface 95. As is the case of FIG. 6, in FIG. 9, the layer forming member 323 is represented by the two-dot chain line and the moving of the layer forming member 323 is indicated by the arrow 32a.

As a specific example, in the exemplary case shown in FIG. 6, in a case where it is assumed that the length 950 of the spot row is 25 mm, the size of the projection surface 95 is 350 mm in the X direction and 1000 mm in the Y direction, the scan speed of the multi-spot line beam 8 in the X direction is 1000 mm/sec, the time required to stop the optical head 11 to be still in the Y direction is 0.5 seconds, and the time required to thermally stabilize the modeling material 91 after heating is 3 seconds, the time for one scan in the X direction is 0.35 seconds and the number of times of scan in the X direction is 40. Herein, as shown in FIG. 6, in the case where move and stop of the optical head 11 are repeated for each swath 951, the time required to perform writing of the whole projection surface 95 is about 34 seconds (= (0.35 seconds + 0.5 seconds) × 40 times). On the other hand, as shown in FIG. 9, in the case where the optical head 11 is continuously moved, the movement speed of the optical head 11 is 71.4 mm/sec (= 25 mm/0.35 seconds), and the time required to perform writing of the whole projection surface 95 is about 14 seconds (= 1000 mm/(71.4 mm/sec)). Further, in a case where it is assumed that the delay time 71 is 3 seconds, the time required to perform processing of one layer in FIG. 9 is 17 seconds (= 14 seconds + 3 seconds).

Furthermore, each of the above-described numerical values is only one example, and even if the scan speed in the X direction is 5000 mm/sec, for example, the movement speed in the Y direction is 357 mm/sec and this is a feasible speed.

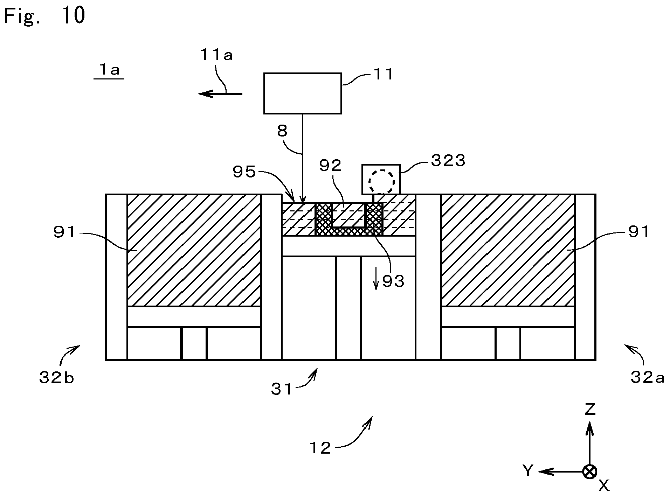

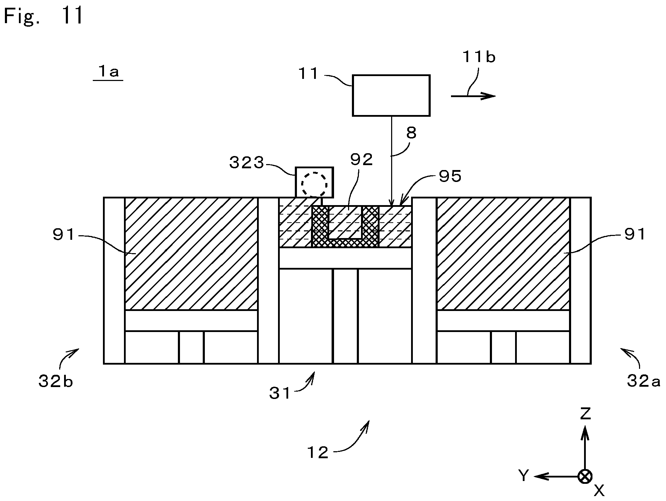

FIGs. 10 and 11 are views each showing a three-dimensional modeling apparatus 1a in accordance with another example. In the three-dimensional modeling apparatus 1a, writing on the projection surface 95 is performed while the optical head 11 moves in the (+Y) direction and also while the optical head 11 moves in a (-Y) direction. In other words, the head moving direction of the optical head 11 for writing is reversible, and the (-Y) direction is a reversed head moving direction with respect to the head moving direction in the (+Y) direction. In the three-dimensional modeling apparatus 1a, a feeding part which is the same as the feeding part 32 shown in FIG. 2 is additionally provided on the (+Y) side of the modeling part 31 in the three-dimensional modeling apparatus 1 shown in FIG. 2. Hereinafter, the feeding part on the (-Y) side of the modeling part 31 is referred to as a "first feeding part 32a" and the feeding part on the (+Y) side of the modeling part 31 is referred to as a "second feeding part 32b". The first feeding part 32a and the second feeding part 32b share the layer forming member 323. In FIGs. 10 and 11, constituent elements identical to those in FIG. 2 are represented by the same reference signs.

FIG. 10 shows a manner in which the optical head 11 moves in the (+Y) direction as indicated by the arrow 11a. FIG. 11 shows a manner in which the optical head 11 moves in the (-Y) direction as indicated by the arrow 11b. The operation of the three-dimensional modeling apparatus 1a is the same as that shown in FIG. 8 except that writing and formation of the material layer 92 are performed while the optical head 11 moves in the (+Y) direction and the (-Y) direction. Specifically, the delay time 71 is received and stored in advance (Step S11), and after the preprocessing is completed (Step S12), the material layer 92 is lowered in the modeling part 31 and the writing on the projection surface 95 is started while the optical head 11 moves in the (+Y) direction (Step S14). After the delay time 71 elapses from the start of the writing, the first feeding part 32a starts formation of a next material layer 92 (Step S15).

After the writing and the formation of the material layer 92 are completed (Steps S16 to S18), the material layer 92 is lowered in the modeling part 31 (Step S13), and the writing on the projection surface 95 is started while the optical head 11 moves in the (-Y) direction (Step S14), as shown in FIG. 11. After the delay time 71 elapses from the start of the writing, the second feeding part 32b starts formation of a next material layer 92 (Step S15). Specifically, before the irradiation of light onto one material layer 92 is finished while the optical head 11 moves in the (-Y) direction, the layer formation mechanism 12 starts formation of a next material layer 92 toward the (-Y) direction. After the writing and the formation of the material layer 92 are completed (Steps S16 to S18), the material layer 92 is lowered in the modeling part 31 (Step S13) and the optical head 11 and the first feeding part 32a perform writing and formation of a material layer 92.

Since the writing is performed while the optical head 11 moves in the (+Y) direction and the (-Y) direction, it is possible to perform modeling at higher speed in the three-dimensional modeling apparatus 1a. Further, in order to achieve such an operation, the three-dimensional modeling apparatus 1a has a configuration where the arrangement order of the optical head 11 and the layer forming member 323 in the Y direction can be exchanged. In other words, the layer forming member 323 can pass through below the optical head 11.

As described above, in the three-dimensional modeling apparatus 1 or 1a (hereinafter, it is assumed that the three-dimensional modeling apparatuses 1 and 1a are each expressed simply as the "three-dimensional modeling apparatus 1" and the "three-dimensional modeling apparatus 1" includes the "three-dimensional modeling apparatus 1a" as long as no inconsistency is caused), by moving the optical head 11 in the Y direction, it is possible to create a large-scale modeled obj ect while reducing a manufacturing cost of the three-dimensional modeling apparatus 1. Since the number of optical heads 11 is one, it is also possible to reduce the person-hours in the regular maintenance of the optical head 11. Further, since the writing on the projection surface 95 and the formation of a next material layer 92 are performed partially concurrently, it is possible to further increase the productivity of the modeled object.

Though it is important to manage the preliminary heating of the modeling material 91 in the three-dimensional modeling apparatus 1, since there is enough time from the formation of the material layer 92 until the writing on this material layer 92, it is possible to stably perform the writing while reducing time consumption for the preliminary heating. Further, since the next material layer 92 covers a region after being subject to the writing quickly after the writing, it is possible to avoid the heat from a preliminary heating apparatus from being given to the material after the writing and increase the accuracy of shape of the modeled object. In the three-dimensional modeling apparatus 1, especially, since the optical head 11 largely moves, it is effective to quickly form a next material layer 92.

Additionally, in the three-dimensional modeling apparatus 1, since the delay time 71 from the start of the writing until the start of the formation of a next material layer 92 is variable, it is possible to appropriately increase the productivity in accordance with the type of the modeling material 91.

In the three-dimensional modeling apparatus 1, various modifications can be made. In the three-dimensional modeling apparatus 1, by repeating the formation of the material layer 92 of a powdery or pasty modeling material 91 and the irradiation of light onto the material layer 92, a three-dimensional model is formed in the material layers 92 layered in the modeling space 30. The configuration for performing the irradiation of light and the configuration for forming the material layer 92 may be changed in various ways.

The light source of the optical head 11, for example, is not limited to the laser light source 21. A variety of other well-known light sources may be adopted. Various optical systems may be adopted as the illumination optical system 22 only if the optical system can converge light and guide the light to regions of a plurality of modulation elements of the optical modulator 23.

As the diffractive optical modulator 23 having the plurality of modulation elements which are linearly arranged, a PLV (planar light valve) having high power resistance performance is preferable. The optical modulator 23 may be a grating light valve (GLV (registered trademark)). As the optical modulator 23, a diffractive optical modulator based on various principles can be adopted only if the diffractive optical modulator can control the irradiation and the non-irradiation of light at a plurality of positions in the projection image.

Any other mechanism such as a polygon laser scanner or the like, instead of the galvano scanner 44, may be adopted as a scanning mechanism for scanning the irradiation position of light at high speed by changing an orientation of a mirror. In the above-described three-dimensional modeling apparatus 1, though the projection image formed at the irradiation position of light is scanned in the X direction or an almost X direction, the scan direction is not limited to these directions. In order to perform two-dimensional writing by scanning the projection image, the scan direction has only to be a direction crossing the direction of the spot row in the projection image. In the projection image, the spot row is in the direction corresponding to an arrangement direction of the plurality of modulation elements of the optical modulator 23. On the other hand, since a writing range needs to be widened by moving the optical head 11, the scan direction is a direction also crossing the head moving direction. In a case where it is assumed that a direction in which writing of one swath 951 is performed is referred to as a "primary scan direction" and an arrangement direction of the swaths 951 which is the head moving direction is referred to as a "secondary scan direction", the primary scan direction is a direction crossing the direction of the spot row and also crossing the secondary scan direction.

Though the projection image of the optical modulator 23 is formed on the projection surface 95 by the projection optical system 24, in the strict sense, it is not necessary that the optical modulator 23 and the projection surface 95 are optically conjugated. Within a range where the three-dimensional modeling can be performed, the projection surface 95 may slightly deviate from the position conjugated with the optical modulator 23. The configuration of the projection optical system 24 may be changed in various ways.

The first projection optical system 241 forms the intermediate image 84 of the optical modulator 23 at a predetermined intermediate position, and since the optical modulator 23 is a one-dimensional spatial modulator, it can be understood that the "intermediate image" means at least an image in the long axis direction. In other words, in the first projection optical system 241, the optical modulator 23 and the intermediate image 84 have a conjugate positional relation with respect to the long axis direction. Therefore, the projection image of the optical modulator 23 on the projection surface 95 means at least a projection image in the long axis direction. As a matter of course, the first projection optical system 241 may have the same projection magnification both in the long axis direction and in the short axis direction. Further, the first projection optical system 241 may have only one lens. The first projection optical system 241 may have one lens group or three or more lens groups.

As the head moving mechanism 13 for moving the optical head 11 in the head moving direction parallel to the material layer 92, a variety of well-known mechanisms may be adopted. For example, a linear motor, a feed mechanism in which a ball screw is combined with a motor, or the like may be adopted.

The layer forming member 323 of the layer formation mechanism 12 is not limited to the squeegee. A roller or a member for spraying the modeling material 91 may be adopted as the layer forming member. The layer formation mechanism 12 may be a mechanism having no layer forming member 323. A variety of other mechanisms may be adopted as the layer formation mechanism 12 only if a new projection surface 95 can be formed by forming a new material layer 92 of the modeling material 91 on the projection surface 95.

In the three-dimensional modeling apparatus 1, the layer formation mechanism 12 forms the material layer 92 toward the head moving direction, and before finishing the irradiation of light onto one material layer 92 by the optical head 11, the layer formation mechanism 12 starts formation of a next material layer 92. This operation does not need to be performed for all the slices (each of which is a portion corresponding to one material layer 92 of the modeled object) of the modeled object. In a case where a region of one slice, which should be irradiated with light, is small, for example, since there is a possibility that the time required for the irradiation of light onto the projection surface 95 corresponding to this slice is short, the layer formation mechanism 12 may start formation of a next material layer 92 after completing the irradiation of light.

In the three-dimensional modeling apparatus 1, though the delay time 71 from when the optical head 11 starts irradiation of light onto one material layer 92 until when the layer formation mechanism 12 starts formation of a next material layer 92 is variable, when the modeling material 91 which is to be used is determined to be one type, the delay time 71 may be fixed. Further, only if the delay time 71 substantially reflects the time from when the optical head 11 starts irradiation of light onto one material layer 92 until when the layer formation mechanism 12 starts formation of a next material layer 92, the delay time 71 does not need to strictly indicate the above-described time.

In the three-dimensional modeling apparatus 1a shown in FIGs. 10 and 11, though the head moving direction of the optical head 11 is reversible and the layer forming member 323 is shared by the first feeding part 32a and the second feeding part 32b, the layer forming member 323 may be provided in each of the first feeding part 32a and the second feeding part32b.

Though the optical head 11 moves in the head moving direction and the layer formation mechanism 12 forms the next material layer 92 in the same direction partially concurrently with the move of the optical head 11 in the above-described preferred embodiment, when attention is paid only to the purpose of forming a large-scale modeled object while reducing the manufacturing cost of the three-dimensional modeling apparatus 1, the move of the optical head 11 and the formation of the next material layer 92 may not be performed concurrently. Further, the next material layer 92 may be formed toward the (+Y) direction as one modulation spot is formed, instead of a plurality of modulation spots, by the optical head 11 and the irradiation position of the light beam is gradually moved in the (+Y) direction while being scanned in the X direction. In other words, moving the optical head 11 while performing writing with the multi-spot line beam 8 and partially concurrently performing the irradiation of light and the formation of the material layer 92 may be adopted as individual technical matters in the three-dimensional modeling apparatus.

The configurations in the above-described preferred embodiment and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1, 1a: Three-dimensional modeling apparatus
- 11: Optical head
- 12: Layer formation mechanism
- 13: Head moving mechanism
- 21: Laser light source
- 22: Illumination optical system
- 23: Optical modulator
- 24: Projection optical system
- 30: Modeling space
- 71: Delay time
- 91: Modeling material
- 92: Material layer
- 93: Modeled object
- 230: Pixel row (modulation elements)
- S13 to S18: Step

## Claims

1. A three-dimensional modeling apparatus (1, 1a) for forming a three-dimensional model (93) in material layers (92) layered in a modeling space (30) by repeating formation of a material layer (92) of a powdery or pasty modeling material (91) and irradiation of light (8) onto said material layer (92), comprising:
a layer formation mechanism (12) for forming a material layer (92) in said modeling space (30);
an optical head (11) for irradiating said material layer (92) with light (8); and
a head moving mechanism (13) for moving said optical head (11) in a head moving direction (Y) parallel to said material layer (92),
wherein said optical head (11) comprises:
a light source (21);
a diffractive optical modulator (23) having a plurality of modulation elements (230) which are linearly arranged;
an illumination optical system (22) for guiding light emitted from said light source (21) to said optical modulator (23); and
a projection optical system (24) for forming a projection image of said optical modulator (23) on said material layer (92) and moving said projection image in a scan direction (8a, 8b) crossing a direction corresponding to an arrangement direction of said plurality of modulation elements (230) and crossing said head moving direction (Y) by changing an orientation of a mirror (44).

2. The three-dimensional modeling apparatus (1, 1a) according to claim 1, wherein
said optical modulator (23) is a planar light valve or a grating light valve.

3. The three-dimensional modeling apparatus (1, 1a) according to claim 1 or 2, wherein
said optical head (11) continuously moves in said head moving direction (Y).

4. The three-dimensional modeling apparatus (1, 1a) according to any one of claims 1 to 3, wherein
said layer formation mechanism (12) forms a material layer (92) toward said head moving direction (Y), and
before finishing irradiation of light (8) onto one material layer (92) by said optical head (11), said layer formation mechanism (12) starts formation of a next material layer (92).

5. The three-dimensional modeling apparatus (1, 1a) according to claim 4, wherein
time (71) from when said optical head (11) starts irradiation of light (8) onto said one material layer (92) until when said layer formation mechanism (12) starts formation of said next material layer (92) is variable.

6. The three-dimensional modeling apparatus (1a) according to claim 4 or 5, wherein
said head moving direction (+Y) of said optical head (11) is reversible,
said layer formation mechanism (12) forms a material layer (92) toward a reversed head moving direction (-Y) which is a reversed direction of said head moving direction (+Y) when said optical head (11) moves in said reversed head moving direction (-Y), and
before said optical head (11) finishes irradiation of light (8) onto one material layer (92) while moving in said reversed head moving direction (-Y), said layer formation mechanism (12) starts formation of a next material layer (92) toward said reversed head moving direction (-Y).

7. A three-dimensional modeling method for forming a three-dimensional model (93) in material layers (92) layered in a modeling space (30) by repeating formation of a material layer (92) of a powdery or pasty modeling material (91) and irradiation of light (8) onto said material layer (92), comprising:
a) lowering a latest material layer (92) by the thickness of one layer (92) (S13);
b) starting irradiation of light (8) onto said latest material layer (92) by said optical head (11) while moving said optical head (11) in a head moving direction (Y) parallel to said latest material layer (92) (S14);
c) starting formation of a next material layer (92) toward said head moving direction (Y) after a delay time (71) set in advance elapses after said operation b) and before finishing irradiation of light (8) onto said latest material layer (92) (S15);
d) finishing irradiation of light (8) onto said latest material layer (92) (S16);
e) finishing formation of said next material layer (92) (S17); and
f) repeating said operations a) to e) (S18).
